# EUROPEAN PATENT APPLICATION

(11) **EP 4 376 174 A2**
(43) Date of publication of application: **29.05.2024**
(21) Application number: 23167541.4
(22) Date of filing: 12.04.2023
(51) Int. Cl.: H01M 10/627, H01M 50/204, H01M 50/244, H01M 50/251

(54) **ENERGY STORAGE CONTAINER AND ASSEMBLY METHOD THEREOF**

(30) Priority: 25.11.2022 CN 202211494403
(71) Applicant: CALB Group Co., Ltd., Changzhou City, Jiangsu Province (CN)
(72) Inventor: SHAN, Yifei, Changzhou City, Jiangsu Province (CN)
(74) Representative: Becker, Eberhard

(57) **Abstract**

An energy storage container and an assembly method thereof are provided. The energy storage container includes a container body, an air duct (20), and an air guide (30). The container body is provided with at least one battery rack (10). The air duct (20) is arranged on a top portion of the battery rack (10). The air guide (30) communicates with the air duct (20) and the battery rack (10). The air guide (30) includes a first connecting portion (31), a flexible air guide portion (32), and a second connecting portion (33). The first connecting portion (31) is connected to the air duct (20), the second connecting portion (33) is connected to the battery rack (10), and the flexible air guide portion (32) is connected to both the first connecting portion (31) and the second connecting portion (33).

## Description

### BACKGROUND

### Technical Field

The disclosure relates to the technical field of energy storage, and in particular, relates to an energy storage container and an assembly method thereof.

### Description of Related Art

With the advancement and progress of technology, the research and development of new energy is imperative. Energy storage containers are one of the important carriers in the applications of new energy, and the research on energy storage containers is becoming increasingly extensive. An energy storage container is provided with a plurality of batteries most of the time. However, the batteries will generate a lot of heat during use, which will cause the temperature inside the energy storage container to rise and cause safety hazards.

Note that the above-mentioned information disclosed in the BACKGROUND section is only used to strengthen the understanding of the background of the disclosure, and therefore it may include information that does not constitute the prior art known to a person having ordinary skill in the art.

### SUMMARY

According to an aspect of the disclosure, the disclosure provides an energy storage container, and the energy storage container includes a container body, an air duct, and an air guide.

The container body is provided with at least one battery rack.

The air duct is arranged on a top portion of the battery rack.

The air guide communicates with the air duct and the battery rack. The air guide includes a first connecting portion, a flexible air guide portion, and a second connecting portion. The first connecting portion is connected to the air duct, the second connecting portion is connected to the battery rack, and the flexible air guide portion is connected to both the first connecting portion and the second connecting portion.

According to another aspect of the disclosure, the disclosure further provides an assembly method of an energy storage container, and the method includes the following steps.

An air guide is compressed towards a side close to an air duct, so that a flexible air guide portion of the air guide is deformed and a second connecting portion connected to the flexible air guide portion is close to the air duct. The air duct is arranged on a top portion of a container body, and the flexible air guide portion is connected to the air duct through a first connecting portion.

At least one battery rack is installed into the container body. A top surface of the battery rack is provided with a second air hole.

The second connecting portion is connected to the battery rack, so that the air guide communicates with the second air hole.

It should be understood that the above general description and the following detailed description are only exemplary and explanatory and may not be used to limit the disclosure.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.

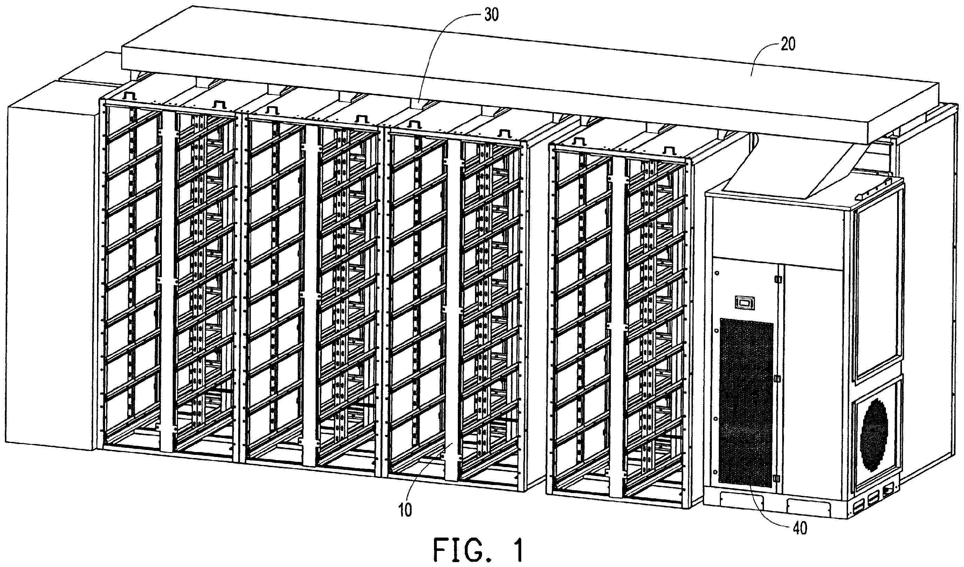

FIG. 1 is a schematic structural view of an energy storage container provided by an exemplary embodiment of the disclosure.

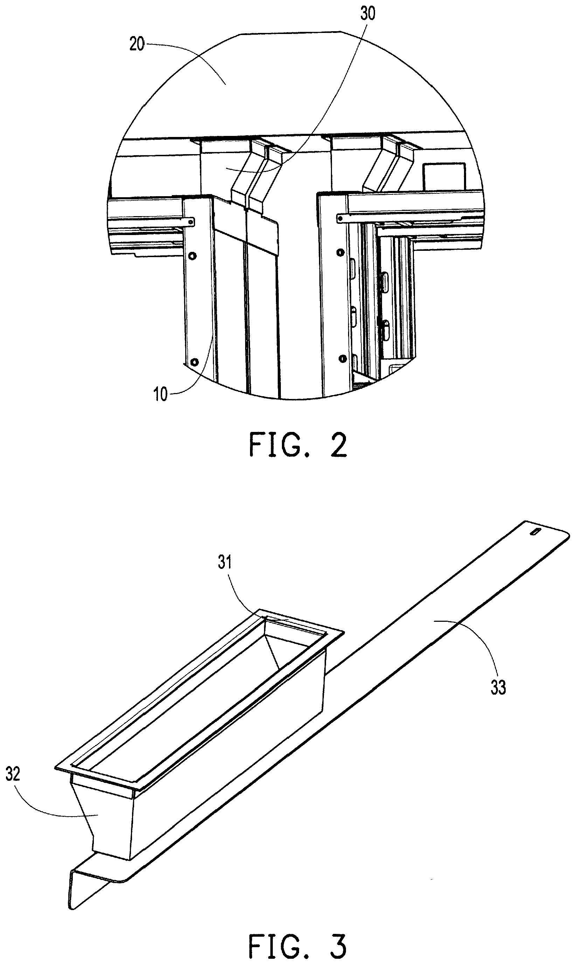

FIG. 2 is a local enlargement view of the energy storage container provided by an exemplary embodiment of the disclosure.
FIG. 3 is a schematic structural view of an air guide provided by an exemplary embodiment of the disclosure.

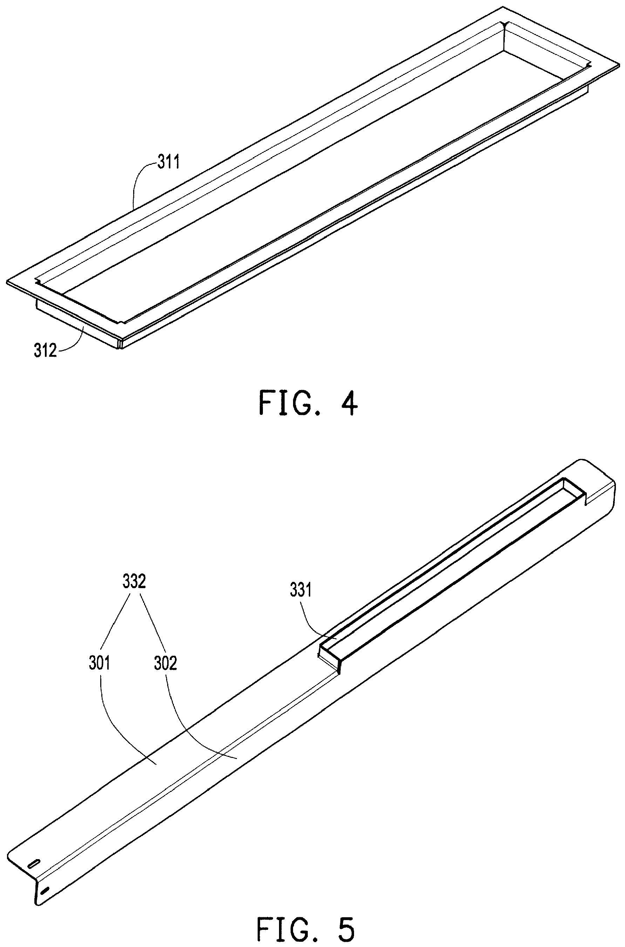

FIG. 4 is a schematic structural view of a first connecting portion provided by an exemplary embodiment of the disclosure.
FIG. 5 is a schematic structural view of a second connecting portion provided by an exemplary embodiment of the disclosure.
FIG. 6 is a schematic structural view of a battery rack provided by an exemplary embodiment of the disclosure.

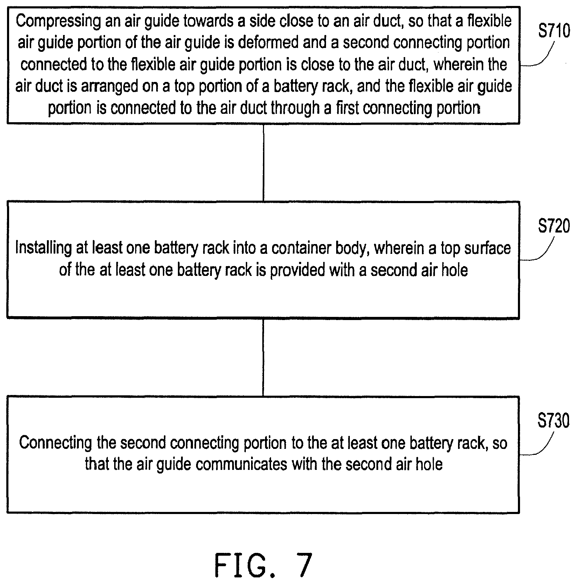

FIG. 7 is a flow chart of an assembly method of an energy storage container provided by an exemplary embodiment of the disclosure.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

The disclosure aims to provide an energy storage container and an assembly method thereof to achieve cooling of an energy storage device at least to a certain extent.

Exemplary embodiments of the disclosure provide an energy storage container first, and the energy storage container includes a container body, an air duct 20, and an air guide 30. The container body is provided with at least one battery rack 10. The air duct is 20 arranged on a top portion of the battery rack 10. The air guide 30 communicates with the air duct 20 and the battery rack 10. The air guide 30 includes a first connecting portion 31, a flexible air guide portion 31, and a second connecting portion 33. The first connecting portion 31 is connected to the air duct 20, the second connecting portion 33 is connected to the battery rack 10, and the flexible air guide portion 32 is connected to both the first connecting portion 31 and the second connecting portion 33.

In the energy storage container provided by the embodiments of the disclosure, by arranging the air duct 20 on the top portion of the battery rack 10 and arranging the air guide 30 between the air duct 20 and the battery rack 10, cooling gas is provided into the battery rack 10 through the air duct 20 and the air guide 30 to cool the inside of the battery rack 10. In this way, the temperature of the energy storage container is prevented from reaching excessively high, and the safety of the energy storage container is improved. Further, the air guide 30 includes the first connecting portion 31, the second connecting portion 33, and the flexible air guide portion 32. The first connecting portion 31 is connected to the air duct 20, the second connecting portion 33 is connected to the battery rack 10, and the flexible air guide portion 32 is connected to the first connecting portion 31 and the second connecting portion 33. The flexible air guide portion 32 can be compressed, that is, the flexible air guide portion 32 can be deformed during installation, so that the energy storage container can be easily assembled. Further, by connecting the air guide 30 with the flexible air guide portion 32 to the air duct 20 and the battery rack 10, the stability of the connection between the air duct 20 and the battery rack 10 can be ensured. Abnormal connection among the air guide 30, the air duct 20, and the battery rack 10 due to processing errors or vibrations is also prevented from occurring.

Further, the energy storage container provided by the embodiments of the disclosure may further include a stopper. The stopper is connected to the battery rack 10 and is configured to limit the second connecting portion 33. By configuring the stopper to limit the second connecting portion 33, the battery rack 10 and the air guide 30 can be quickly installed, and production efficiency may thus be improved.

Components of the energy storage container provided by the embodiments of the disclosure are described in detail as follows.

The container body is a hollow structure, and at least one battery rack 10 and an air conditioner 40 are arranged in the container. The battery rack 10 is used for installation of batteries, and the air conditioner 40 is used for providing cold air for cooling the energy storage container. Exemplarily, the container body has an air conditioner chamber and a battery chamber, the air conditioner chamber is used for receiving the air conditioner 40, and the battery chamber is used for accommodating battery components. In the container body, the air conditioner chamber and the battery chamber may be independently arranged, that is, the air conditioner chamber and the battery chamber are in an isolated state. The air conditioner chamber may be located on one end portion of the battery chamber.

Exemplarily, the container body may be a cuboid or approximately cuboid structure, and the inside of the container body is a hollow structure. For instance, the container body may be formed by splicing a plurality of plates. The container body may include a top plate, a bottom plate, and side plates arranged between the top plate and the bottom plate. The top plate and the bottom plate are arranged in parallel, the four side plates surround the top plate, and both the top plate and the bottom plate are connected to the side plates to form a cuboid container body. A divider plate is arranged in the container body, and the divider plate divides the space in the container body into the air conditioner chamber and the battery chamber.

The air conditioner 40 is arranged in the air conditioning chamber, and the air conditioner 40 is located on a bottom portion of the air conditioner chamber. The air conditioner 40 has a first air outlet and a second air outlet, the first air outlet of the air conditioner 40 is configured to output cold air, and the second air outlet of the air conditioner 40 sucks the hot air in the battery chamber.

The air duct 20 is arranged on the top portion of the battery rack 10, and the air duct 20 may communicate with the air conditioner 40 and the battery chamber. For instance, a first air duct and a second air duct may be provided on the battery rack 10. The first air duct is configured to transmit the cooling gas to the battery chamber, and the second air duct is configured to transmit the gas in the battery chamber to the air conditioner 40. The first air duct may be connected to the first air outlet, and the second air duct may be connected to the second air outlet.

The battery rack 10 is arranged in the battery chamber, the battery rack 10 has an accommodating compartment, and a battery cluster is arranged in the accommodating compartment of the battery rack 10. A plurality of battery racks 10 and a plurality of battery clusters may be arranged in the battery chamber. The battery racks 10 correspond to the battery clusters in a one-to-one manner, and the battery clusters are arranged in the corresponding accommodating compartments of the battery racks 10.

The plurality of battery racks 10 are arranged sequentially in the battery chamber, for example, the plurality of battery racks 10 are arranged in a first direction. One or more columns of battery racks 10 may be arranged in the battery chamber, and a column direction of the battery racks 10 is the first direction.

Each battery rack 10 may include a rack body and a bracket 140. The rack body has an accommodating compartment. The bracket 140 is arranged on a side wall of the accommodating compartment and divides the accommodating compartment into a plurality of battery compartments. Each battery cluster includes a plurality of battery boxes, and each battery box in the battery cluster is arranged in a battery compartment. In the battery cluster, a gap is formed between adjacent battery boxes through the bracket 140, and the gap can allow the cold air transported by the air duct 20 to enter between adjacent batteries.

The rack body may be a frame structure. The rack body may include a top frame 110, a bottom frame 150, and a vertical beam 130, and the top frame 110 and the bottom frame 150 are arranged opposite to each other. The vertical beam 130 is arranged between the top frame 110 and the bottom frame 150, and the bracket 140 is connected to the vertical beam 130. That is, an accommodating compartment is formed between the top frame 110 and the bottom frame 150, and the vertical beam 130 is connected to both the top frame 110 and the bottom frame 150, so that the vertical beam 130 is used for connecting and supporting.

Exemplarily, the rack body may be a cuboid or a structure similar to a cuboid. Both the top frame 110 and the bottom frame 150 in the rack body are frame structures. The top frame 110 is formed by connecting four top beams end to end in sequence, and the bottom frame 150 is formed by connecting four bottom beams end to end in sequence.

Herein, the structure of the top frame 110 and the bottom frame 150 may be the same, and the top frame 110 and the bottom frame 150 are parallel to each other. In a vertical direction, the projection of a top rack on the bottom overlaps the bottom frame 150. The four vertical beams 130 are arranged at four vertices of the bottom frame 150, and the other ends of the vertical beams 130 are connected to the vertices of the top frame 110. The vertical beams 130 are perpendicular to the top frame 110 and the bottom frame 150.

In the embodiments of the disclosure, the vertical beams 130 are provided at the vertices of the top frame 110 and the bottom frame 150, and at least one vertical beam 130 is provided on long sides of the top frame 110 and the bottom frame 150 as well. For instance, the vertical beams 130 may be provided at the midpoints of the long sides of the top frame 110.

The battery rack 10 is a frame structure. When the battery cluster is placed in the battery compartment of the battery rack 10, an empty space is formed between the vertical beams 130 of the battery rack 10, and this empty space is used as a part of the circulation channel of the cooling medium (gas) in the energy storage container.

Exemplarily, an empty space is provided between two adjacent battery clusters, and the empty space forms a cooling chamber. A divider is arranged in the cooling chamber, and the divider is connected to the battery rack 10 to divide the cooling chamber into an air inlet chamber and an air return chamber. A via hole may be provided on the divider, and the via hole communicates with the air inlet chamber and the air return chamber.

Herein, the divider may be the vertical beam 130 of the battery rack 10. For instance, the divider is a vertical beam 130 arranged in the middle of the long side of the top frame 110. A through hole may be provided on the vertical beam 130, and the through hole penetrates through the vertical beam 130 in a length direction of the battery, so as to communicate with the air inlet chamber and the air return chamber on both sides of the vertical beam 130. In an applicable embodiment, half holes may be provided on the vertical beams 130 of two adjacent battery racks 10, and the two half holes form one via hole together.

The battery cluster includes multiple battery boxes, and multiple battery boxes may be stacked in the battery cluster. For instance, the battery rack 10 is provided with multiple layers of battery compartments, and each battery compartment is provided with one battery box. A chamber is provided inside the battery box, and one or a plurality of single batteries are arranged in the chamber. Each of the single batteries may include a casing and a cell, and the cell is arranged in the casing. Devices such as terminal posts for electrical connection may be provided on the battery casing.

The battery box may have a rectangular or approximately rectangular structure, and the battery box may be inserted into the battery box in the length direction. The battery box may include two first surfaces opposite to each other and four second surfaces surrounding the first surfaces, and an area of each first surface is greater than an area of each second surface, When the battery box is located in the battery compartment, the first surface of the battery box is horizontal.

The single battery in the battery box may be a rectangular parallelepiped or approximately rectangular parallelepiped battery. When a plurality of batteries are arranged in the battery box, the plurality of batteries are arranged in sequence in the battery box. The plurality of batteries in the battery box are electrically connected (series or parallel) to electrical connectors on the battery box. Certainly, in practical applications, the single battery in the embodiments of the disclosure may also be a cylindrical battery or the like. The single battery may be a secondary battery, such as a ternary lithium battery, a lithium iron battery, a sodium battery, a lithium cobalt oxide battery, a lithium manganese oxide battery, or a lithium titanate battery.

In order to improve the cooling capacity of the single battery during cooling, an air passing hole and an air return fan may be provided on the battery box body. The air return fan may be arranged at one end of the battery box close to the air return chamber, and the air passing hole is arranged at the end of the battery box close to the air inlet chamber. For instance, if the air return chamber is located at the front of the battery rack 10 and the air inlet chamber is located at the rear of the battery rack 10, the air return fan is arranged at the front of the battery box, and the air passing hole is arranged at the rear of the battery box.

Herein, the return air fan works during the charging and discharging process of an energy storage device. The air return fan draws air out of the battery box, so the air pressure inside the battery box is lower than the air pressure outside the battery box, and external air enters the inside of the battery box body through the air passing hole. The air passing hole communicates with the air inlet chamber, and the cooling gas in the air inlet chamber is sucked into the battery box. Under such a reciprocating cycle, the heat generated by the batteries in the battery box is passed out of the battery box, and the cooling of the batteries in the battery box is achieved.

The accommodating compartment has a battery inlet for allowing a battery to enter the accommodating compartment during installation. An air return duct is arranged on one side of an air inlet duct close to the battery inlet. One end of the battery box close to the battery inlet is provided with an air return fan, and one end of the battery box away from the battery inlet is provided with an air passing hole.

The air duct 20 is arranged on a top surface of the battery rack 10, a predetermined gap is provided between the air duct 20 and the top surface of the battery rack 10, and the air guide 30 is located between the air duct 20 and the top surface of the battery rack 10. One surface (bottom surface) of the air duct 20 facing the battery rack 10 is a plane, and the bottom surface of the air duct 20 is parallel to the top surface of the battery rack 10. For instance, the air duct 20 may have a rectangular parallelepiped or approximately rectangular parallelepiped structure, and the interior of the air duct 20 is a hollow structure. One or a plurality of first air holes are arranged on the bottom surface of the air duct 20.

A bent portion is provided at one end of the air duct 20 close to the air conditioner 40, the bent portion is bent downwards, and the bent portion is configured to connect the air conditioner 40 and the air duct 20. For instance, one end of the first air duct close to the air conditioner 40 is provided with a first bent portion, and the first bent portion is connected to an air outlet of the air conditioner 40 and the first air duct. One end of the second air duct close to the air conditioner 40 is provided with a second bent portion, and the second bent portion is connected to an air return port of the air conditioner 40 and the second air duct.

The air guide 30 communicates with the air duct 20 and the battery rack 10, and the air exchange between the battery rack 10 and the air duct 20 is achieved through the air guide 30, that is, the heat exchange between the battery rack 10 and the air duct 20 is achieved. Exemplarily, the first air duct (air inlet air duct) and the battery rack 10 may be communicated through the air guide 30. Alternatively, the second air duct (air return air duct) and the battery rack 10 may be communicated through the air guide 30. Alternatively, the first air duct (air inlet air duct) communicates with the battery rack 10 and the second air duct (air return air duct) communicates with the battery rack 10 through the air guide 30.

The air guide 30 includes the first connecting portion 31, the flexible air guide portion 31, and the second connecting portion 33. The first connecting portion 31 is connected to the air duct 20, the second connecting portion 33 is connected to the battery rack 10, and the flexible air guide portion 32 is connected to both the first connecting portion 31 and the second connecting portion 33.

Herein, the flexible air guide portion 32 may be deformed when receiving an external force. For instance, the material of the flexible air guide portion 32 may be rubber, plastic, or resin. By configuring the flexible air guide portion 32 to be connected to the first connecting portion 31 and the second connecting portion 33, the flexible air guide portion 32 may be deformed for easy installation during installation. Further, the problem of poor sealing caused by processing errors and the like may be prevented from occurring.

The first connecting portion 31 includes a first flange 311 and a first pipe section 312, and the first flange 311 is connected to the air duct 20. One end of the first pipe section 312 is connected to the first flange 311, and the other end of the first pipe section 312 is connected to the flexible air guide portion 32. The first air hole is provided on a surface of the air duct 20 facing the battery rack 10, and the first pipe section 312 communicates with the first air hole. The first flange 311 surrounds the first air hole to achieve sealed connection between the first connecting portion 31 and the air duct 20.

Herein, the first flange 311 is connected to the air duct 20, for example, the first flange 311 may be connected to the air duct 20 by means of bolt connection, welding, riveting, glue connection and the like. The first flange 311 surrounds the first air duct, that is, the projection of the first flange 311 on the air duct 20 at least covers the first air hole. The first pipe section 312 is connected to one end of the first flange 311 away from the air duct 20.

In order to improve the sealing performance between the first flange 311 and the air duct 20, a sealing member may be provided between the first flange 311 and the air duct 20. For instance, when the first flange 311 and the air duct 20 are connected by bolts, a sealing ring may be arranged between the first flange 311 and the air duct 20. When the first flange 311 and the air duct 20 are connected by glue connection, the connecting glue may be a sealant, and a sealant layer is formed between the first flange 311 and the air duct 20 through the connecting glue.

The first connecting portion 31 is disposed on a bottom portion of the air duct 20, and the first flange 311 may be connected to the bottom surface of the air duct 20 and makes the first pipe section 312 face the first air hole of the air duct 20. Alternatively, the first connecting portion 31 may penetrate through the first air hole on the air duct 20, that is, the first flange 311 is located in the air duct 20, and the first pipe section 312 passes through the first air hole.

The first flange 311 is a ring structure, for example, the first flange 311 is a rectangular ring or the first flange 311 is a circular ring. The first pipe section 312 may be a circular pipe or a rectangular pipe. The first pipe section 312 and the first flange 311 may be of an integral structure, or the first pipe section 312 and the first flange 311 may be of a separate structure.

The first connecting portion 31 may be made of a hard material. That is, the stiffness of the first connecting portion 31 is greater than a predetermined value, and the stiffness of the first connecting portion 31 is greater than the stiffness of the flexible air guide portion 32. For instance, the material of the first connecting portion 31 may be metal or hard plastic or the like. When the material of the first connecting portion 31 is a metal material, the first connecting portion 31 may be formed by casting, and when the material of the first connecting portion 31 is plastic, the first connecting portion 31 may be formed by injection molding. Alternatively, when the material of the first connecting portion 31 is a metal material, the first flange 311 and the first pipe section 312 may also be connected by welding.

The flexible air guide portion 32 is connected to one end of the first pipe section 312 away from the first flange 311, and the flexible air guide portion 32 may be sleeved on the first pipe section 312. The flexible air guide portion 32 and the first pipe section 312 may be connected by glue, or the flexible air guide portion 32 and the first pipe section 312 may be connected by a cable tie or the like.

The second connecting portion 33 includes a second flange 332 and a second pipe section 331, and the second flange 332 is connected to the battery rack 10. One end of the second pipe section 331 is connected to the second flange 332, and the other end of the second pipe section 331 is connected to the flexible air guide portion 32. A second air hole is provided on a surface of the battery rack 10 facing the air duct 20and the second air hole communicates with the second pipe section 331 The second flange 332 surrounds the second air hole to achieve sealing between the second connecting portion 33 and the battery rack 10.

Herein, the second flange 332 is connected to the battery rack 10, for example, the second flange 332 and the battery rack 10 may be connected by means of fastening, bolt connection, welding, riveting, glue connection and the like. The second flange 332 surrounds the second air duct, that is, the projection of the second flange 332 on the battery rack 10 at least covers the second air hole. The second pipe section 331 is connected to one end of the second flange 332 away from the battery rack 10.

In order to improve the sealing performance between the second flange 332 and the battery rack 10, a sealing member may be provided between the second flange 332 and the battery rack 10. For instance, when the second flange 332 and the battery rack 10 are connected by bolts, a sealing ring may be provided between the second flange 332 and the battery rack 10. When the second flange 332 and the battery rack 10 are connected by glue connection, the connecting glue may be a sealant, and a sealant layer is formed between the second flange 332 and the battery rack 10 through the connecting glue.

The second flange 332 is a ring structure, for example, the second flange 332 is a rectangular ring or the second flange 332 is a circular ring. The second pipe section 331 may be a circular pipe or a rectangular pipe. The second pipe section 331 and the second flange 332 may be of an integral structure, or the second pipe section 331 and the second flange 332 may be of a separate structure.

The second connecting portion 33 may be made of a hard material. That is, the stiffness of the second connecting portion 33 is greater than the predetermined value, and the stiffness of the second connecting portion 33 is greater than the stiffness of the flexible air guide portion 32. For instance, the material of the second connecting portion 33 may be metal or hard plastic or the like. When the material of the second connecting portion 33 is a metal material, the second connecting portion 33 may be formed by casting, and when the material of the second connecting portion 33 is plastic, the second connecting portion 33 may be formed by injection molding. Alternatively, when the material of the second connecting portion 33 is a metal material, the second flange 332 and the second pipe section 331 may also be connected by welding.

The flexible air guide portion 32 is connected to one end of the second pipe section 331 away from the second flange 332, and the flexible air guide portion 32 may be sleeved on the second pipe section 331. The flexible air guide portion 32 and the second pipe section 331 may be connected by glue, or the flexible air guide portion 32 and the second pipe section 331 may be connected by a cable tie or the like.

The second air hole on the battery rack 10 may be formed by an opening hole on the top surface of the battery rack 10. Alternatively, the second air hole on the battery rack 10 may be formed through a gap between adjacent battery racks 10. Alternatively, the second air hole on the battery rack 10 may be formed together by the opening on an edge of the top surface of the battery rack 10 and the gap between adjacent battery racks 10.

The second flange 332 may include a first flange plate 301 and a second flange plate 302. The first flange plate 301 is arranged on an end portion of the second pipe section 331, and the first flange plate 301 is parallel to the top surface of the battery rack 10. The second flange plate 302 is perpendicular to the first flange plate 301, and at least a portion of the second flange plate 302 extends to a side portion of the battery rack 10. That is, the air guide 30 is arranged on the edge of the battery rack 10, the first flange plate 301 is arranged on the top portion of the battery rack 10, and the second flange plate 302 is arranged on the side portion of the battery rack 10.

Herein, a through hole is provided on the first flange plate 301, the second pipe section 331 is arranged at the through hole of the first flange 311, and the through hole is opposite to the second air hole on the battery rack 10. That is, the through hole communicates with the second pipe section 331 and the second air hole.

The air guide 30 is inserted into the battery rack 10 in a predetermined direction, and a length of the second flange 332 is greater than a length of the battery rack 10 in the predetermined direction. When the air guide 30 is installed, the air guide 30 is usually plugged and connected to the top surface of the battery rack in the predetermined direction manually or mechanically. By configuring a length of the air guide 30 to be greater than the length of the battery rack 30 in the predetermined direction, the air guide 30 may be easily installed and disassembled, and the production and maintenance efficiency is improved.

An end portion of the second flange 332 is provided with a positioning hole. The positioning hole may be provided at one end of the second flange 332, or positioning holes may be provided at both ends of the second flange 332. When the positioning hole is provided at one end of the second flange 332, the positioning hole is located at the end of the second flange 332 facing the outside of the battery rack 10. When the second flange 332 includes the first flange plate 301 and the second flange plate 302, positioning holes may be provided on both the first flange plate 301 and the second flange plate 302.

The stopper is connected to the battery rack 10 and is configured to limit the second connecting portion 33. Exemplarily, the stopper is located on an end portion of the second connecting portion 33, and at least a portion of the stopper presses against the second connecting portion 33.

Herein, the stopper may include a guiding portion, a pressing portion, and a fixing portion, and the guiding portion and the fixing portion are connected to two ends of the pressing portion. The fixing portion is fixedly connected to the battery rack 10, for example, the fixing portion may be connected to the top portion of the battery rack 10 by means of welding or bolting. The pressing portion is connected to the fixing portion, a gap is provided between the pressing portion and the battery rack 10, and the gap accommodates the end portion of the second flange 332. When the end portion of the second flange 332 is located in the gap, the pressing portion presses the second flange 332. The guiding portion is arranged at one end of the pressing portion away from the fixing portion. The guiding portion is inclined to guide the second flange 332 when the second flange 332 enters the gap between the pressing portion and the battery rack 10.

Herein, the inclined arrangement of the guiding portion means that a distance between the guiding portion and the top surface of the battery rack 10 gradually increases in the direction in which the pressing portion is away from the fixing portion. That is, the guiding portion is inclined upwards in a direction away from the fixing portion.

It should be noted that the parallel mentioned in the embodiments of the disclosure refers to the parallel within an error tolerance range. For instance, when an angle between the air duct 20 and the top surface of the battery rack 10 is not greater than a predetermined angle value, the air duct 20 is considered to be parallel to the top surface of the battery rack 10. The vertical mentioned in the embodiments of the disclosure refers to the vertical within the error tolerance range. For instance, when an angle between the first flange plate 301 and the second flange plate 302 is near 90 degrees (such as 89 degrees to 91 degrees), it is considered that the first flange plate 301 and the second flange plate 302 are perpendicular.

In the energy storage container provided by the embodiments of the disclosure, by arranging the air duct 20 on the top portion of the battery rack 10 and arranging the air guide 30 between the air duct 20 and the battery rack 10, cooling gas is provided into the battery rack 10 through the air duct 20 and the air guide 30 to cool the inside of the battery rack 10. In this way, the temperature of the energy storage container is prevented from reaching excessively high, and the safety of the energy storage container is improved. Further, the air guide 30 includes the first connecting portion 31, the second connecting portion 33, and the flexible air guide portion 32. The first connecting portion 31 is connected to the air duct 20, the second connecting portion 33 is connected to the battery rack 10, and the flexible air guide portion 32 is connected to the first connecting portion 31 and the second connecting portion 33. The flexible air guide portion 32 can be compressed, that is, the flexible air guide portion 32 can be deformed during installation, so that the energy storage container can be easily assembled. Further, by connecting the air guide 30 with the flexible air guide portion 32 to the air duct 20 and the battery rack 10, the stability of the connection between the air duct 20 and the battery rack 10 can be ensured. Abnormal connection among the air guide 30, the air duct 20, and the battery rack 10 due to processing errors or vibrations is also prevented from occurring.

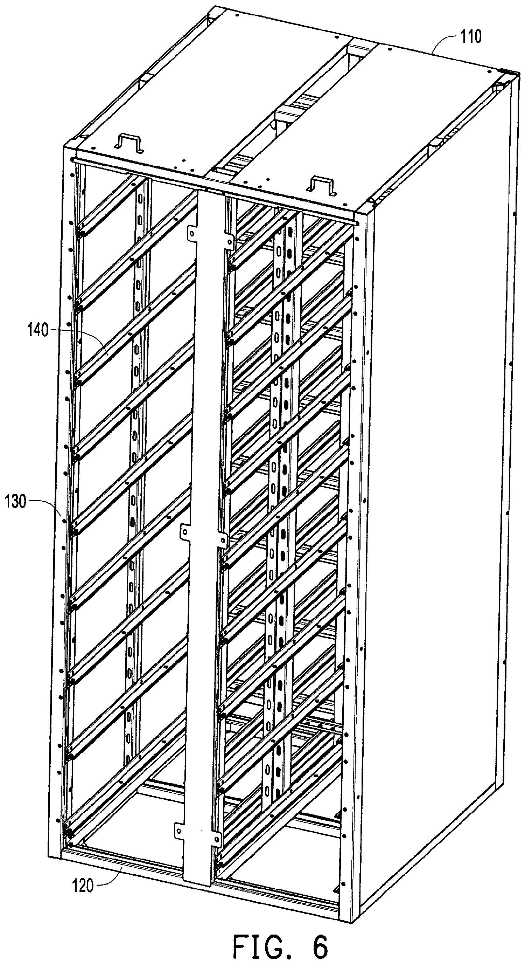

The exemplarily embodiments of the disclosure further provides an assembly method of an energy storage container, and as shown in FIG. 6, the assembly method includes the following steps.

In step S710, an air guide is compressed towards a side close to an air duct, so that a flexible air guide portion of the air guide is deformed and a second connecting portion connected to the flexible air guide portion is close to the air duct. The air duct is arranged on a top portion of a container body, and the flexible air guide portion is connected to the air duct through a first connecting portion.

In step S720, at least one battery rack is installed into the container body. A top surface of the battery rack is provided with a second air hole.

In step S730, the second connecting portion is connected to the battery rack, so that the air guide communicates with the second air hole.

In the assembly method of the energy storage container provided by the embodiments of the disclosure, by compressing the air guide 30 towards the side close to the air duct 20, the flexible air guide portion 32 is deformed, and the second connecting portion 33 connected to the flexible air guide portion 32 moves closer to the air duct 20 side. In this way, interference between the air guide 30 and the battery rack 10 is avoided when the battery rack 10 is installed, and the energy storage container may thus be easily installed. Further, by connecting the air guide 30 with the flexible air guide portion 32 to the air duct 20 and the battery rack, the stability of the connection between the air duct 20 and the battery rack 10 can be ensured. Abnormal connection among the air guide 30, the air duct 20, and the battery rack 10 due to processing errors or vibrations is also prevented from occurring.

Further, before step S710, the assembly method of the energy storage container provided by the embodiments of the disclosure may further include the following steps.

In step S740, the first connecting portion is connected to the air duct, so that a first air hole on the air duct communicates with the air guide.

Steps of the assembly method of the energy storage container provided by the embodiments of the disclosure are described in detail as follows.

In step S740, the first connecting portion 31 is connected to the air duct 20, so that the first air hole on the air duct 20 communicates with the air guide 30.

Herein, the air guide 30 includes the first connecting portion 31, the flexible air guide portion 31, and the second connecting portion 33. The first connecting portion 31 is connected to the air duct 20, the second connecting portion 33 is connected to the battery rack 10, and the flexible air guide portion 32 is connected to both the first connecting portion 31 and the second connecting portion 33.

The first connecting portion 31 includes the first flange 311 and the first pipe section 312, and the first flange 311 is connected to the air duct 20. One end of the first pipe section 312 is connected to the first flange 311, and the other end of the first pipe section 312 is connected to the flexible air guide portion 32. The first air hole is provided on the surface of the air duct 20 facing the battery rack 10, and the first pipe section 312 communicates with the first air hole. The first flange 311 surrounds the first air hole to achieve sealed connection between the first connecting portion 31 and the air duct 20.

Herein, the first flange 311 is connected to the air duct 20, for example, the first flange 311 may be connected to the air duct 20 by means of bolt connection, welding, riveting, glue connection and the like. The first flange 311 surrounds the first air duct, that is, the projection of the first flange 311 on the air duct 20 at least covers the first air hole. The first pipe section 312 is connected to the end of the first flange 311 away from the air duct 20.

In order to improve the sealing performance between the first flange 311 and the air duct 20, a sealing member may be provided between the first flange 311 and the air duct 20. For instance, when the first flange 311 and the air duct 20 are connected by bolts, a sealing ring may be arranged between the first flange 311 and the air duct 20. When the first flange 311 and the air duct 20 are connected by glue connection, the connecting glue may be a sealant, and a sealant layer is formed between the first flange 311 and the air duct 20 through the connecting glue.

The first connecting portion 31 is disposed on the bottom portion of the air duct 20, and the first flange 311 may be connected to the bottom surface of the air duct 20 and makes the first pipe section 312 face the first air hole of the air duct 20. Alternatively, the first connecting portion 31 may penetrate through the first air hole on the air duct 20, that is, the first flange 311 is located in the air duct 20, and the first pipe section 312 passes through the first air hole.

In step S710, the air guide 30 is compressed towards the side close to the air duct 20, so that the flexible air guide portion 32 of the air guide 30 is deformed and the second connecting portion 33 connected to the flexible air guide portion 32 is close to the air duct 20. The air duct 20 is arranged on the top portion of the battery rack 10, and the flexible air guide portion 32 is connected to the air duct 20 through the first connecting portion 31.

Herein, the flexible air guide portion 32 may be deformed when receiving an external force. For instance, the material of the flexible air guide portion 32 may be rubber, plastic, or resin. By configuring the flexible air guide portion 32 to be connected to the first connecting portion 31 and the second connecting portion 33, the flexible air guide portion 32 may be deformed during installation. By compressing the air guide 30 toward the side close to the air duct 20, the air guide 30 is prevented from interfering with the installation of the battery rack 10. Compressing the air guide 30 to the side close to the air duct 20 can be implemented by manual operation or by tooling, which is not specifically limited in the embodiments of the disclosure.

In step S720, at least one battery rack 10 is installed into the container body. The top surface of the battery rack 10 is provided with the second air hole.

Herein, the container body is provided with a battery chamber, and the at least one battery rack 10 is arranged in the battery chamber. The battery rack 10 is provided with an accommodating compartment, a battery cluster is arranged in the accommodating compartment, and the battery cluster includes at least one battery. A plurality of battery racks 10 and a plurality of battery clusters may be arranged in the battery chamber. The battery racks 10 correspond to the battery clusters in a one-to-one manner, and the battery clusters are arranged in the corresponding accommodating compartments of the battery racks 10. The plurality of battery racks 10 are arranged sequentially in the battery chamber, for example, the plurality of battery racks 10 are arranged in the first direction. One or more columns of battery racks 10 may be arranged in the battery chamber, and the column direction of the battery racks 10 is the first direction.

In step S730, the second connecting portion 33 is connected to the battery rack 10, so that the air guide 30 communicates with the second air hole.

In an applicable embodiment, the connection between the second connecting portion 33 and the battery rack 10 may be achieved in the following manner: The second flange 332 is fastened to the stopper on the battery rack 10. The second flange 332 is connected to the flexible air guide portion 32 through the second pipe section 331.

Herein, the stopper is connected to the battery rack 10 and is configured to limit the second connecting portion 33. Exemplarily, the stopper is located on the end portion of the second connecting portion 33, and at least a portion of the stopper presses against the second connecting portion 33.

The stopper may include the guiding portion, the pressing portion, and the fixing portion, and the guiding portion and the fixing portion are connected to two ends of the pressing portion. The fixing portion is fixedly connected to the battery rack 10, for example, the fixing portion may be connected to the top portion of the battery rack 10 by means of welding or bolting. The pressing portion is connected to the fixing portion, a gap is provided between the pressing portion and the battery rack 10, and the gap accommodates the end portion of the second flange 332. When the end portion of the second flange 332 is located in the gap, the pressing portion presses the second flange 332. The guiding portion is arranged at the end of the pressing portion away from the fixing portion. The guiding portion is inclined to guide the second flange 332 when the second flange 332 enters the gap between the pressing portion and the battery rack 10.

Herein, the inclined arrangement of the guiding portion means that the distance between the guiding portion and the top surface of the battery rack 10 gradually increases in the direction in which the pressing portion is away from the fixing portion. That is, the guiding portion is inclined upwards in the direction away from the fixing portion.

Certainly, in practical applications, the second connecting portion 33 and the battery rack 10 may also be connected by means of welding, bolt connection, glue connection, or riveting, which is not specifically limited in the embodiments of the disclosure.

In the assembly method of the energy storage container provided by the embodiments of the disclosure, by compressing the air guide 30 towards the side close to the air duct 20, the flexible air guide portion 32 is deformed, and the second connecting portion 33 connected to the flexible air guide portion 32 move closer to the air duct 20 side. In this way, interference between the air guide 30 and the battery rack 10 is avoided when the battery rack 10 is installed, and the energy storage container may thus be easily installed. Further, by connecting the air guide 30 with the flexible air guide portion 32 to the air duct 20 and the battery rack 10, the stability of the connection between the air duct 20 and the battery rack 10 can be ensured. Abnormal connection among the air guide 30, the air duct 20, and the battery rack 10 due to processing errors or vibrations is also prevented from occurring.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. An energy storage container, comprising:
a container body provided with at least one battery rack (10);
an air duct (20) arranged on a top portion of the at least one battery rack (10); and
an air guide (30) communicating with the air duct (20) and the at least one battery rack (10), wherein the air guide (30) comprises a first connecting portion (31), a flexible air guide portion (32), and a second connecting portion (33), the first connecting portion (31) is connected to the air duct (20), the second connecting portion (33) is connected to the at least one battery rack (10), and the flexible air guide portion (32) is connected to both the first connecting portion (31) and the second connecting portion (33).

2. The energy storage container according to claim 1, wherein the first connecting portion (31) comprises:
a first flange (311) connected to the air duct (20); and
a first pipe section (312), wherein one end of the first pipe section (312) is connected to the first flange (311), and the other end of the first pipe section (312) is connected to the flexible air guide portion (32).

3. The energy storage container according to claim 2, wherein a first air hole is provided on a surface of the air duct (20) facing the at least one battery rack (10), and the first pipe section (312) communicates with the first air hole.

4. The energy storage container according to claim 3, wherein the first flange (311) surrounds the first air hole to achieve sealed connection between the first connecting portion (31) and the air duct (20).

5. The energy storage container according to claim 1, wherein the second connecting portion (33) comprises:
a second flange (332) connected to the at least one battery rack (10); and
a second pipe section (331), wherein one end of the second pipe section (331) is connected to the second flange (332), and the other end of the second pipe section (331) is connected to the flexible air guide portion (32).

6. The energy storage container according to claim 5, wherein a second air hole is provided on a surface of the at least one battery rack (10) facing the air duct (20), and the second air hole communicates with the second pipe section (331).

7. The energy storage container according to claim 6, wherein the second flange (332) surrounds the second air hole to achieve sealing between the second connecting portion (33) and the at least one battery rack (10).

8. The energy storage container according to claim 5, wherein the second flange (332) comprises:
a first flange plate (301) arranged on an end portion of the second pipe section (331) and on a top surface of the at least one battery rack (10); and
a second flange plate (302) perpendicular to the first flange plate (301), wherein at least a portion of the second flange plate (302) extends to a side portion of the at least one battery rack (10).

9. The energy storage container according to claim 8, wherein the air guide (30) is inserted into the at least one battery rack (10) in a predetermined direction, and a length of the second flange (332) is greater than a length of the at least one battery rack (10) in the predetermined direction.

10. The energy storage container according to claim 9, wherein an end portion of the second flange (332) is provided with a positioning hole.

11. The energy storage container according to claim 1, further comprising:
a stopper connected to the at least one battery rack (10) and configured to limit the second connecting portion (33).

12. The energy storage container according to claim 2, further comprising:
a stopper connected to the at least one battery rack (10) and configured to limit the second connecting portion (33).

13. The energy storage container according to claim 3, further comprising:
a stopper connected to the at least one battery rack (10) and configured to limit the second connecting portion (33).

14. The energy storage container according to claim 5, further comprising:
a stopper connected to the at least one battery rack (10) and configured to limit the second connecting portion (33).

15. The energy storage container according to claim 11, wherein the stopper is located on an end portion of the second connecting portion (33), and at least a portion of the stopper presses against the second connecting portion (33).

16. The energy storage container according to claim 12, wherein the stopper is located on an end portion of the second connecting portion (33), and at least a portion of the stopper presses against the second connecting portion (33).

17. The energy storage container according to claim 14, wherein the stopper is located on an end portion of the second connecting portion (33), and at least a portion of the stopper presses against the second connecting portion (33).

18. An assembly method of an energy storage container, comprising:
compressing an air guide (30) towards a side close to an air duct (20), so that a flexible air guide portion (32) of the air guide (30) is deformed and a second connecting portion (33) connected to the flexible air guide portion (32) is close to the air duct (20), wherein the air duct (20) is arranged on a top portion of a battery rack (10), and the flexible air guide portion (32) is connected to the air duct (20) through a first connecting portion (31);
installing at least one battery rack (10) into a container body, wherein a top surface of the at least one battery rack (10) is provided with a second air hole; and
connecting the second connecting portion (33) to the at least one battery rack (10), so that the air guide (30) communicates with the second air hole.

19. The assembly method according to claim 18, wherein the connecting the second connecting portion (33) to the at least one battery rack (10) comprises:
fastening a second flange (332) to a stopper on the at least one battery rack (10), wherein the second flange (332) is connected to the flexible air guide portion (32) through a second pipe section (331).

20. The assembly method according to claim 18, further comprising:
connecting the first connecting portion (31) to the air duct (20) so that a first air hole on the air duct (20) communicates with the air guide (30).
